# EUROPEAN PATENT SPECIFICATION

(11) **EP 4 226 294 B1**
(45) Date of publication and mention of the grant of the patent: **25.11.2026**
(21) Application number: 21793984.2
(22) Date of filing: 17.09.2021
(51) Int. Cl.: G06N 10/20, G06N 10/60

(54) **METHODS AND APPARATUS FOR PARALLEL QUANTUM COMPUTING**
VERFAHREN UND VORRICHTUNG FÜR PARALLELES QUANTEN-COMPUTING
PROCÉDÉS ET APPAREIL POUR INFORMATIQUE QUANTIQUE PARALLÈLE

(30) Priority: 12.10.2020 US 202063198339 P
(43) Date of publication of application: 16.08.2023
(73) Proprietor: Riverlane Ltd, Cambridge, Cambridgeshire CB2 3BZ (GB)
(72) Inventor: CRUISE, James, Cambridge CB2 3BZ (GB); PARKS, Tom, Cambridge CB2 3BZ (GB)
(74) Representative: Riverlane Ltd
(86) International application number: PCT/GB2021/052419
(87) International publication number: WO 2022/079406

(56) References cited:
- US-A1- 2018 260 245
- US-A1- 2020 026 551
- US-A1- 2020 174 836
- CRUISE JAMES R. ET AL: "Practical Quantum Computing: The value of local computation", 17 September 2020 (2020-09-17), XP055873425, Retrieved from the Internet <URL:https://arxiv.org/pdf/2009.08513.pdf> [retrieved on 20211215]
- STEPHEN DIADAMO ET AL: "Distributed Quantum Computing and Network Control for Accelerated VQE", ARXIV.ORG, CORNELL UNIVERSITY LIBRARY, 201 OLIN LIBRARY CORNELL UNIVERSITY ITHACA, NY 14853, 7 January 2021 (2021-01-07), XP081895233, DOI: 10.1109/TQE.2021.3057908

## Description

### BACKGROUND

The present disclosure relates to apparatus, systems and methods for parallel processing of classical-quantum hybrid algorithms.

"*Practical Quantum Computing: The value of local computation"* (arXiv:2009.08513 [quant-ph]) discusses three key bottlenecks in near-term quantum computers and how these can be mitigated by providing access to local classical computational resources in a quantum processing unit.

### SUMMARY

According to a first aspect of the present disclosure there is provided a computer-implemented method for controlling a classical computer comprising one or more classically-executable-nodes of a classical-quantum hybrid algorithm, wherein the classical computer is operatively coupled to a quantum computer. The method comprises: sending, by the one or more classically-executable-nodes, a first-circuit to the quantum computer for evaluation; receiving a first-circuit-evaluation of the first-circuit from the quantum computer; processing, by the one or more classically-executable-nodes, the first-circuit evaluation during a first-time interval; sending, by the one or more classically-executable-nodes, a second-circuit to the quantum computer for evaluation, by the quantum computer, at least in part during the first-time-interval; and receiving a second-circuit-evaluation of the second-circuit, from the quantum computer, for processing by the one or more classically-executable-nodes.

Optionally, the method may comprise: processing, by the one or more classically-executable-nodes, the second-circuit evaluation during a second-time interval; sending, by the one or more classically-executable-nodes, a third-circuit to the quantum computer for evaluation, by the quantum computer, at least in part during the first-time-interval and/or the second-time-interval; and receiving a third-circuit-evaluation of the third-circuit, from the quantum computer, for processing by the one or more classically-executable-nodes.

Optionally, the classical-quantum hybrid algorithm may have a structure corresponding to a directed acyclic graph with: vertices formed from the one or more classically-executable-nodes; and edges formed from a plurality of quantum-circuits comprising the first-circuit and the second-circuit.

Optionally, the one or more classically-executable-nodes may comprise: a first-node configured to: send the first-circuit to the quantum computer; receive the first-circuit-evaluation from the quantum computer; and process the first-circuit-evaluation during the first-time interval, and a second-node, different than the first-node, the second-node configured to: send the second-circuit to the quantum computer for evaluation at least in part during the first-time-interval; receive the second-circuit-evaluation from the quantum computer; and process the second-circuit-evaluation.

Optionally, the method may comprise: tagging the first-circuit with: a first-node-unique-identifier that uniquely identifies a first-node, of the one or more classically-executable-nodes, sending the first-circuit; a first-request-unique-identifier that uniquely identifies a request of the first-node for the first-circuit-evaluation; receiving the first-circuit-evaluation with the first-node-unique-identifier and the first-request-unique-identifier; and sending the first-circuit-evaluation and the first-request-unique-identifier to the first-node for processing.

Optionally, the method may comprise: tagging the first-circuit with a first-circuit-repeat-count; sending the first-circuit to the quantum computer for evaluation a plurality of times in accordance with the first-circuit-repeat-count; and receiving and processing a plurality of first-circuit-evaluations.

The method comprises: sending a plurality of quantum circuits, comprising the first-circuit and the second-circuit, to a circuit-buffer of the classical computer; selecting a quantum-circuit of the plurality of quantum circuits; sending, if a value of a buffer-counter satisfies a threshold-value, the selected quantum-circuit to the quantum computer for: storage in a fixed-length-buffer; and evaluation by the quantum computer; and incrementing the value of the buffer-counter by one.

Optionally, the method may comprise: receiving the first-circuit-evaluation of the first-circuit from the quantum computer; decrementing the value of the buffer-counter by one.

Optionally the method may comprise checking the circuit-buffer for a further quantum-circuit.

Optionally, the value of the buffer-counter satisfies the threshold-value if the value of the buffer counter corresponds to a number of quantum-circuits present in the fixed-length-buffer that is less than a capacity of the fixed-length-buffer.

The selecting of the quantum-circuit is based on a selection-policy comprising:
partitioning the plurality of quantum circuits based on identifying, for each respective circuit of a respective partition, a common originating node of the of one or more classically-executable-nodes; determining a number of circuits present in each respective partition; and determining that the quantum-circuit belongs to a partition with a smallest number of circuits.

Optionally, the method may comprise adding one or more new-nodes, to the one or more classically-executable-nodes of the classical-quantum hybrid algorithm, based on the first-circuit-evaluation and/or the second-circuit-evaluation.

Optionally, the classical-quantum hybrid algorithm may be one or more of: a Variational Quantum Eigensolver; an optimization algorithm; and a quantum processor benchmarking algorithm.

According to a further aspect of the present disclosure, in accordance with claim 11, there is provided method for controlling a quantum computer, the quantum computer comprising a quantum-processor-unit (104), wherein the quantum computer is operatively coupled to a classical computer, the method performed by the quantum computer.

The method comprises: receiving a plurality of quantum-circuits from one or more classically-executable-nodes of a classical-quantum hybrid algorithm, wherein the plurality of quantum-circuits comprises a first-circuit and a second-circuit; evaluating, using the quantum-processor-unit, the first-circuit to determine a first-circuit-evaluation; sending the first-circuit-evaluation to the at least one or more classically-executable-nodes for processing during a first-time-interval; evaluating, using the quantum-processor-unit, the second-circuit to provide a second-circuit-evaluation, wherein the evaluating of the second-circuit occurs, at least in part, during the first-time-interval; and sending the second-circuit-evaluation to the at least one or more classically-executable-nodes for processing during a second-time-interval.

Optionally, the method may comprise: receiving a third-circuit, of the plurality of quantum-circuits, from the one or more classically-executable-nodes; evaluating, using the quantum-processor-unit, the third-circuit to provide a third-circuit-evaluation, wherein the evaluating of the third-circuit occurs, at least in part, during the first-time-interval and/or the second-time-interval; sending the third-circuit-evaluation to the at least one or more classically-executable-nodes for processing. Optionally, the first-circuit is received from a first-node of the one or more classically-executable-nodes and the second-circuit is received from a second-node of the one or more classically-executable-nodes and the first-node is different than the second-node.

Optionally, the method may comprise: receiving, from a first-node of the one or more classically-executable-nodes, the first-circuit with: a first-node-unique-identifier that uniquely identifies first-node; a first-request-unique-identifier that uniquely identifies a request of the first-node for the first-circuit-evaluation; sending the first-circuit-evaluation with the first-node-unique-identifier and the first-request-unique-identifier to the one or more classically-executable-nodes for processing.

Optionally, the method may comprise: receiving the first-circuit with a first-circuit-repeat-count; evaluating the first-circuit a plurality of times in accordance with the first-circuit-repeat-count; and sending a plurality of first-circuit-evaluations to the at least one or more classically-executable-nodes for processing.

The method comprises: storing the plurality of quantum-circuits in a circuit-buffer of the quantum computer; selecting a quantum-circuit, of the plurality of quantum circuits, based on a selection-policy; evaluating the selected quantum-circuit to determine a selected-quantum-circuit-evaluation; and sending the selected-quantum-circuit-evaluation to the at least one or more classically-executable-nodes for processing.

The selection-policy comprises: partitioning the plurality of quantum circuits based on identifying, for each respective circuit of a respective partition, a common originating node of the of one or more classically-executable-nodes; determining a number of circuits present in each respective partition; and determining that the quantum-circuit belongs to a partition with a smallest number of circuits.

According to a further aspect of the present disclosure there is provided a computer readable medium comprising instructions which, when executed by a computer, the computer comprising a quantum computer operatively coupled to a classical computer, cause the computer to perform the method of any appended claim.

While the disclosure is amenable to various modifications and alternative forms, specifics thereof have been shown by way of example in the drawings and will be described in detail. It should be understood, however, that other embodiments, beyond the particular embodiments described, are possible as well.

The above discussion is not intended to represent every example embodiment or every implementation within the scope of the appended claims. The Figures and

Detailed Description that follow also exemplify various example embodiments. Various example embodiments may be more completely understood in consideration of the following Detailed Description in connection with the accompanying Drawings.

### BRIEF DESCRIPTION OF DRAWINGS

One or more embodiments will now be described by way of example only with reference to the accompanying Drawings in which:
Figure 1 shows an example embodiment of a classical computer operatively coupled to a quantum computer;
Figure 2 shows an example of a serial processing scheme for executing a classical-quantum hybrid algorithm;
Figure 3 shows an example embodiment of a classical-quantum hybrid algorithm with a dataflow graph structure;
Figure 4 shows an example embodiment of a flowchart of a method for parallel execution of a classical-quantum hybrid algorithm
Figure 5 shows an example embodiment of a parallel processing scheme for executing a classical-quantum hybrid algorithm;
Figure 6 shows an example embodiment of a classical computer and a quantum computer configured for parallel processing of a classical-quantum hybrid algorithm;
Figure 7 shows an example embodiment of a classical computer with an unbounded circuit buffer and a quantum computer with a fixed length buffer; and
Figure 8 shows an example embodiment of a computer program product.

### DETAILED DESCRIPTION

Quantum Processing Units (QPUs) will be integrated into a range of computing platforms including high performance computing facilities to provide acceleration to tackle problems which are beyond the reach of current classical computing systems. It is unlikely that there will be a purely quantum computer any time in the near future: issues around memory and long-term data storage make this a relatively long-term prospect. Therefore, in the near future all algorithms utilising QPUs are expected to be hybrid in nature, comprising a mixture of classical and quantum computation. The present disclosure provides methods and apparatus for parallel processing of such hybrid classical-quantum algorithms that fundamentally improves the operation of QPU-based systems by providing for an improved operating system for hybrid classical-quantum computer systems.

Computation on a QPU is fundamentally different than other computational units (such as Graphical Processing Units [GPUs], Field Programable Gate Arrays [FPGAs] and classical computer Central Processing Units [CPUs]) because of the very short timescales which data can be stored and manipulated within qubits in the QPU due to finite qubit coherence times. This means that the computation must carried out in discrete units, often referred to as circuits which includes loading the data onto the qubits, carrying out computation on the qubits and measuring the qubits. This is in contrast to other forms of computational units where a computation can be carried out in a streamed and interleaved fashion, i.e. computational tasks can be split up and paused. As such, control of the computation which is to be carried out on the QPU is different to other computational technologies and therefore requires different ideas. We use the term circuit to refer to one of these computational blocks to be executed on the QPU, which can also contain a small amount of classical computational, for example a measurement-based quantum gate.

Hybrid algorithms interleave the execution of classical computations with the execution of circuits on the QPU. There are a large range of such quantum algorithms to tackle a plethora of problems in the fields of chemistry, optimisation and QPU-benchmarking, among others.

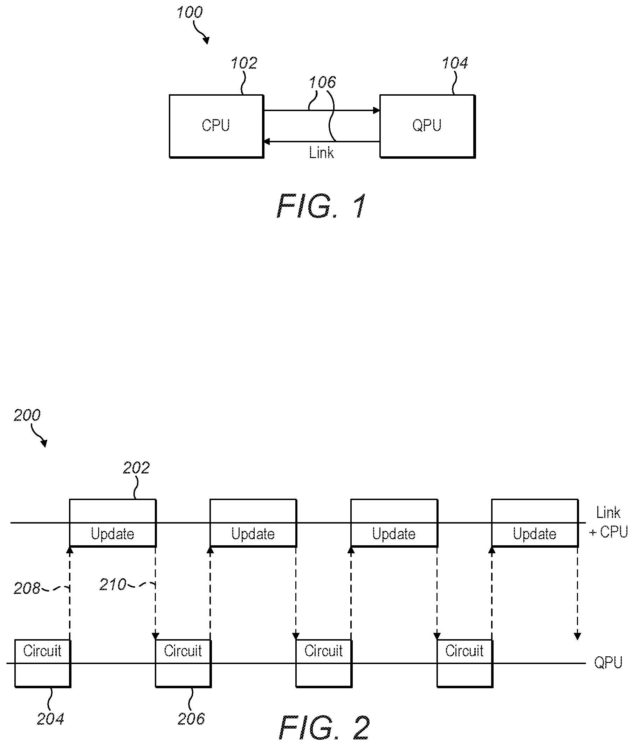

Figure 1 shows a hybrid classical-quantum computing system 100, comprising a CPU 102 connected to a QPU 104. The connection 106 between the CPU 102 and the QPU 104 can take many forms from PCIe lanes through to ethernet links as well as internet links in cloud systems, for example.

This leads to a wide range of latencies, the time to transfer data from the QPU 104 to the CPU 102 or vice versa. For communication time between the CPU 102 and the QPU 104 varies from 100µs up to a number of seconds. It should be noted that for a number of qubit technologies this is orders of magnitude longer than the time required to execute a circuit.

For superconducting qubits, current circuit execution times can be of the order of 5µs. Within the non-error-corrected regime, the circuit execution time is currently upper bounded by the decoherence time of qubits.

In current systems, the classical computation is carried out on the CPU 102 and the circuit execution occurs on the QPU 104.

Figure 2 shows serial processing scheme 200 for executing an adaptive algorithm. In such algorithms, classical computation 202 needs to be completed between each circuit execution. This makes it possible to analyse the data from a first circuit execution 204 and then either adjust a parameter in a second circuit 206 to be executed on the quantum processing unit or to change the nature of the second circuit 206 to be executed. This requires a data transfer 208 to the CPU from the QPU and back 210 between each circuit execution.

Assuming the circuit execution is 5µs and the single trip latency is 100µs, a single circuit and update step takes at least 205µs. Of this time the QPU is being utilised for only 5µs which leads to a qubit utilisation of only 2.5%. Thus, the QPU is sitting idle for 97.5% of time leading to very poor utilisation of resources and increased time to execute the algorithms.

Many hybrid algorithms, such as the original specification of the Variational Quantum Eigensolver (VQE), require the same circuit to the executed many hundreds, or even thousands of times. This allows the batching of circuit executions, i.e. only transferring data between the QPU and CPU once per some (possibly large) number of 'shots' (circuit executions). In this setting the latency time is shared between all the circuit executions and so has nearly no effect on the qubit utilisation numbers. However, more modern algorithms can break this paradigm to improve algorithmic performance and improve the ability to push the qubit hardware to its limits.

Latency issues occur in classical hardware but the discrete units of work execution (circuits) on QPUs require a different approach from the traditional approaches in tackling latency in computation. The solution disclosed below draws from a wide range of areas in classical computation, such as accessing data from solid state data storage and parallel computing. However, an unexpected step is required to merge them and tackle this latency problem in the context of quantum computing.

In a number of cloud computing platforms specifically designed for quantum computing platforms, a queueing procedure can be implemented. However, it is designed to tackle a very different problem than the present disclosure. These procedures are implemented to allow the sharing of a small number of QPUs between a large number of different users as they are designed for algorithms which naturally provide the batching behaviour discussed earlier. The languages and runtime provided for these systems do not allow the exposure of the parallelism within individual algorithms. Furthermore they do not provide an infrastructure to allow parallel execution of classical parts that provide a stream of circuits for execution.

The present disclosure comprises two parts which taken together make it possible to tackle the problem of latency of the QPU to CPU link for hybrid algorithms. The first part is a methodology for writing hybrid algorithms which exposes the inherent but unexpected parallelism within the algorithms: parallelism extraction. The second part discloses the infrastructure to take advantage of this parallelism to mitigate the latency bottleneck: circuit scheduling.

Hybrid quantum algorithms can be highly concurrent in nature with many parts which could be executed in parallel, for example the estimation of expectation for different Pauli operators within VQE. However, given the expense of QPUs there has been no benefit in exposing this parallelism has not been exposed to the runtime.

However, this disclosure shows that the concurrency available can be used to solve technical issues other than parallelising over multiple QPUs. It is possible to use concurrency to reduce unused time on the QPU. This provides a technical advantage by (a) pipelining circuits to run on the QPU and (b) overlapping circuit execution and classical processing.

Converting algorithms to a dataflow representation exposes concurrency present in an algorithm. This can be done by the user or automatically. A dataflow program consists of executable nodes connected by directed edges. A code node represents a computation, and an edge represents the dependency of a node on the result of a prior node. The program as a whole forms a directed acyclic graph (DAG). In this form the classical algorithm should be decomposed into nodes (which correspond to the vertices of the DAG), and every circuit to run on the QPU is represented as an edge (where an edge can also include the transmission of classical data between nodes with a circuit execution). The dataflow program executes on a runtime that determines (a) when a code node should execute, and (b) the order that requested circuits are sent to the QPU. A node may be executed when the result for every relevant inbound edge has been received. Likewise, a circuit edge may be run on the QPU when the preceding node has finished.

The dataflow graph may be fixed or dynamic. In a fixed graph, the set of code node and links is fixed before execution. In a dynamic graph, a code node may (via function calls) cause additional edges and nodes to be added to the graph. The data flow graph representation exposes the circuit level concurrency to the runtime, as nodes and edges may be run in parallel. This parallelism is exposed to the runtime at the time of execution in the form of sets of eligible nodes and edges to enable mitigation of the latency bottleneck. This disclosure thereby combines techniques for managing IO-bound communication with the circuit dispatch model.

The present disclosure is fundamentally different from pre-existing methods (e.g. TensorFlow Quantum [RTM], or PennylLane [RTM]) which adopt an accelerator model. In this model circuits are considered equivalent to classical accelerator kernels, where kernel dispatch latency is minor compared to kernel execution time. For many hybrid algorithms used for quantum computing, the dispatch latency can be may orders of magnitude longer than the circuit execution time, and so this relationship is not present in general hybrid classical-quantum algorithms.

It is possible to use the concept of a dataflow graph to expose parallelism in hybrid classical-quantum algorithms. The graph may be constructed either implicitly or explicitly. It can also be present within the runtime either explicitly as a graph in a graph storage format or implicitly as a sequence of tasks the runtime is to execute. The compiler or pre-processing step can extract a dataflow representation, and the runtime can store the currently executing program to maximise the availability of circuit-level parallelism.

A possible implementation is that the dataflow graph can be automatically extracted from an implementation of a quantum algorithm that uses a feature of the language called "futures". Futures are also referred to as promises or async functions in other implementations. Futures replace the return value of a function call with a future object that represents the eventual value of that call. After calling a function that returns a future, the runtime (a) records that this call should be performed in the future as a task and (b) provides the calling function with a unique object that will be filled in by the eventual call. To use this mechanism to expose circuit level concurrency, the function that requests a circuit to be run on the QPU should be provided by the runtime as an asynchronous function returning a future. The function that requests a circuit to be run on the QPU can be called a QPU run function. The call to the QPU run function may take 2 arguments: (a) the circuit to evaluate, and optionally, (b) a repeat count for efficiently performing repeated measurements of the same circuit.

As part of this execution the runtime will generate a unique identifier for the request and construct a future object, using the identifier to associate the future object with the requested circuit. The runtime may then immediately resume the algorithm starting immediately after the call to QPU run. The algorithm may then perform 1 of 3 possible operations.
1. The algorithm may proceed to make further calls to QPU run, resulting in the creation of further future objects.
2. The algorithm may perform classical processing on existing data, and this would form part of the same classical computational node. The algorithm designer may choose to make calls to QPU run as soon as it is known they are required, to expose concurrency as soon as possible or to simplify the algorithm design.
3. The algorithm may perform classical processing on a future value. This indicates the end of a single dataflow node, as the circuit future must be resolved before this processing can be performed.

Another possible implementation arises as a user may explicitly construct a dataflow graph for an algorithm. The user creates a graph object. They can add nodes to the graph object by providing a function that implements that node (node body function). The user can also provide structural information on the input and output edges, forming an explicit graph.

A user may provide the structural information in the following way. To add a node to the graph, the user will call a function (graph_add ) passing the function to executed in the node and the number of distinct circuits it will request. The number of circuits to be requested is required to enable references to those circuits to be created. This graph-add function will return to the user an array of references for the requested circuits (outgoing edge references), equal in number to the number of circuit requests. These references may be used in future calls to graph_add to specify the incoming circuits that a node may make use of. By making use of the references to circuit requests (edges), the full dataflow graph for the algorithm can be defined before it is run.

To permit data-dependent control flow, a node may also be able to call the graph-add function. This allows adding nodes dependent on the result of prior circuit evaluations, enabling adaptive algorithms such as accelerated VQE. By construction this ensures that the dataflow graph is a directed acyclic graph, as nodes can only refer to each other by means of the circuit edges. As a reference is only available after the node that triggers the edge has been added to the graph, it is not possible for the programmer to create loops. Ensuring the graph is a directed acyclic graph means it is always possible for the runtime to make forward progress running the program. Once this graph has been explicitly created, it can be executed by a runtime as before.

The following text shows an example code and compilation extraction.

```
   def VQE(ansatz, measurements):
      E = 0
      accuracy = float('inf')
      trial_state = random()
      while accuracy > TARGET:
          for pauli in measurements:
             future_samples[pauli] = sample(ansatz(trial_state), pauli)
       samples = gather(*future_samples)
      E, accuracy, trial_state = optimise(E, accuracy, trial_state, samples)
   async def sample(circuit, measurement):
      value, error = 0, float('inf')
      while error > target:
          sample = await QPU.run(circuit, measurement, shots=SHOTS_PER_REQUEST}
          value, error = update(value, error, sample)
       return value
```

The above code shows how a quantum algorithm has been expressed using asynchronous functions such as in a dataflow graph fashion. It is important to note that the dataflow graph generated is a subset of asynchronous function calls: only QPU run calls correspond to edges in the graph.

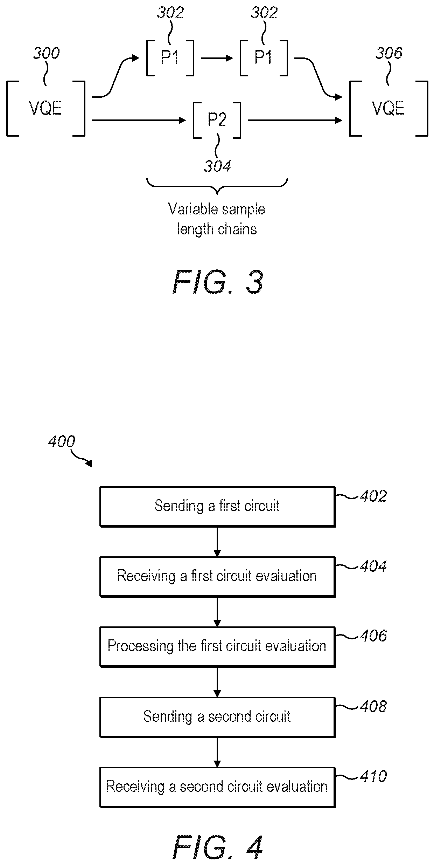

Figure 3 shows that starting from a first VQE block 300, a set of chains of sample blocks for each Pauli are created; specifically in this example, a first Pauli (P1) comprises 2 samples 302, while a second Pauli (P2) comprises 1 sample 304, the results of which are sent to a second VQE block 306. Each 'await QPU.run' call generates a new edge in this graph. It will be appreciated that, in general, different Paulis may have any number of samples.

The concept of circuit scheduling will now be disclosed in detail, in which a key idea is to enable parallel execution of the classical code so that there are always circuits to be executed on the QPU. It will be appreciated that this can be defined in terms of a method of controlling the classical CPU, or in terms of a method of controlling the QPU, or in terms of a combined computing system comprising both the CPU and the QPU.

Figure 4 shows a flowchart 400 of a computer-implemented method for controlling a classical computer comprising one or more classically-executable-nodes of a classical-quantum hybrid algorithm. The classically-executable-nodes are code modules that can be executed on the classical CPU. The classical CPU is operatively coupled to a quantum computer such that information may be sent in either direction between the CPU and the QPU.

The method begins at a first block 402 by sending, by any of the classically-executable-nodes, a first-circuit to the quantum computer for evaluation. At a second block 404, the relevant classically-executable-node receives a first-circuit-evaluation of the first-circuit from the quantum computer. At a third block 406, the classical computer uses the relevant classically-executable-node to process the first-circuit evaluation during a first-time interval.

At a fourth block 408 the method proceeds to send by a classically-executable-node, a second-circuit to the quantum computer for evaluation. This may be the same classically-executable-node as sent the first-circuit, or it may be a different node. Crucially, the second-circuit is sent for evaluation by the quantum computer at least in part during the first-time-interval. The time of sending of the second-circuit may thereby occur at any time before the end of the first-time-interval such that it is possible for the quantum computer to be evaluating the second-circuit at a time that overlaps (at least in part) with the time that the classical computer is processing the first-circuit. Finally, at a fifth block 410, the classical computer receives a second-circuit-evaluation of the second-circuit, from the quantum computer, for processing by the relevant classically-executable-node (or nodes) that requested the second-circuit-evaluation.

From the perspective of the quantum computer, there is disclosed a computer-implemented method for controlling the quantum computer to perform the circuit evaluation task mentioned above. The quantum computer comprises a quantum-processor-unit that itself comprises a plurality of qubits that can evaluate quantum circuits.

This method includes receiving a plurality of quantum-circuits from one or more classically-executable-nodes of a classical-quantum hybrid algorithm running on a classical computer to which the quantum computer is suitably connected. The plurality of quantum circuits include a first-circuit and a second-circuit. The quantum computer then evaluates the first-circuit to determine a first-circuit-evaluation and send the first-circuit-evaluation back to the classically-executable-node(s) on the classical computer that requested it. The first-circuit-evaluation is sent to the classical computer such that it can be processed during a first-time-interval. It is important to appreciate that the time interval associated with the classical computation includes the communication time between the classical and quantum processors. Making use of this time interval to perform processing at both classical and quantum processors can dramatically improve performance of the overall system.

The quantum computer then proceeds to evaluate the second-circuit to provide a second-circuit-evaluation. Crucially, the evaluation of the second-circuit occurs, at least in part, during the first-time-interval, such that there is at least a partial temporal overlap between the quantum processing of the second-circuit-evaluation and the classical processing of the first-circuit-evaluation. This simultaneous processing that occurs at the respective classical and quantum processors provides the performance advantage referred to above. Then, the second-circuit-evaluation is sent to the relevant classically-executable-node(s) for processing during a second-time-interval that may be subsequent to the first-time-interval.

It will be appreciated that these methods can be directly generalized to the processing of any number of quantum circuits and their respective circuit evaluation, such that the quantum computer can be in use at, or close to, 100% of the time.

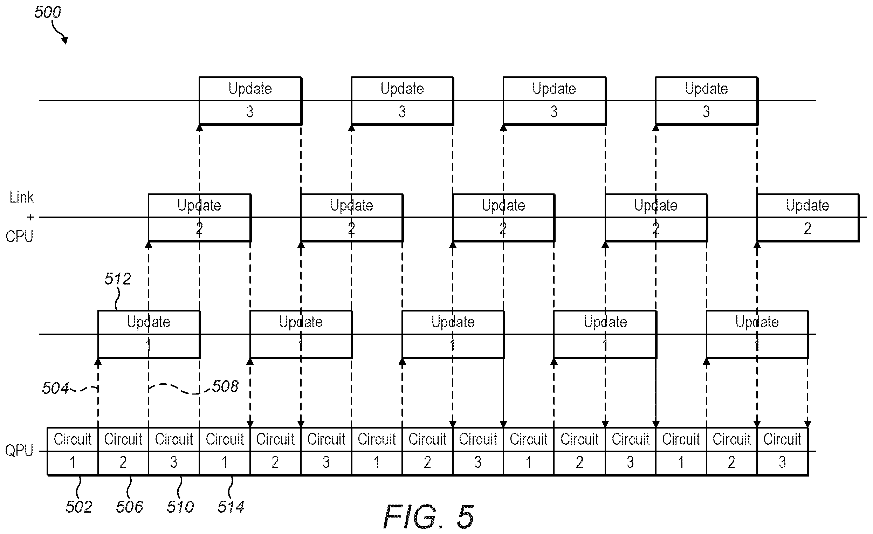

Figure 5 shows a processing scheme in the case that 3 different circuits need to be processed. Where there are 3 parallel streams of work that can be executed as part of the algorithm, the method starts by executing the circuit associated with stream 1 (the first quantum circuit 502) and return the result 504 of the evaluation to the CPU. Then it is possible to execute the circuit for stream 2 (a second quantum circuit 506) and return the result 508 and similarly then for stream 3 (a third quantum circuit 510). The third-quantum-circuit may be subject to quantum evaluation at least in part during the same time interval as the first and/or second circuit evaluations are being classically processed. Once these three circuits have been executed (dependent on timings) the update step 512 for stream 1 has been completed and the next circuit 514 for this stream will be ready to be executed. The simultaneous processing provides for improved performance in part because it makes productive use of the transfer time required to transfer circuit evaluations from the QPU to the CPU. The process can then be repeated as many times as is required to process all three streams.

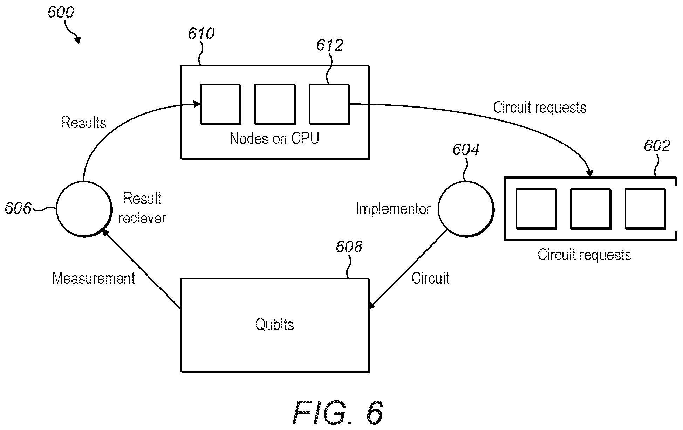

Figure 6 shows a schematic diagram of a hybrid classical-quantum computing system. To facilitate methods of the present disclosure, two key pieces of infrastructure can be used: (a) a circuit queue 602 and associated implementer 604 as well as (b) a result receiver 606 for the classical computation. The circuit queue and implementer can be integrated with either a QPU or a CPU but for maximal benefit it can be implemented on a small amount of classical computational hardware situated with the QPU. It will be appreciated that the QPU comprises qubits 608, while the CPU comprises the classically executable nodes 610. The following disclosure provides different options as to the possible situation of the circuit queue 602 and implementor 604 with respect to the CPU and QPU.

When a classical code block 612 (which is an example of a classically-executable-node) needs to carry out a computation on the QPU it adds the circuit in question to the queue 602 and pauses waiting for the circuit to be executed. To allow batching, it is possible to append the number of times that this circuit should be executed (which is an example of a first-circuit-repeat-count) if it is not 1.

Once a circuit evaluation is completed on the qubits 608, it firstly triggers the implementer 604 to select the next circuit to be executed. Secondly it passes the measurement result from the qubits 608 to the result receiver 606.

The implementer's 604 role is the scheduling of quantum circuits to be executed on the qubits 608. As soon as the qubits 608 complete a circuit evaluation the implementer 604 selects the next circuit to be executed on the qubits 608 from the queue 602. This is done through a given service discipline prespecified at runtime. This could either be First In First Out (FIFO) or a more complicated service discipline taking into account the number of nodes dependent on the circuits (for example back pressure, as discussed further below).

Upon receiving a result from the qubits 608, the receiver 606 will pass the measurement result to the requesting classical computer node 612 within the CPU and any other node which also required that measurement. Furthermore, it will un-pause any nodes that are now able to carry on their classical computation.

The results receiver 606 can be a single piece of infrastructure implemented on the CPU. Upon a circuit request (note this may be multiple shots of the same circuit) being completed on the qubits 608 the results are sent back to the CPU with the circuit request and requesting node unique identifiers appended. Upon receiving the result from the qubits 608 the result receiver 606 uses the nodes unique identifier to identify the requesting nodes. It then uses the circuit request unique identifier to confirm that the identified node is the requesting node. Once this identification has been completed, it passes the received result to this node and removes the paused condition from this node that is able to continue its execution.

This disclosure focuses on the control of the circuit execution on the QPU and the parallel work that is completed on the classical computer that can be orchestrated to provide continuous demands for the QPU through the parallelism. The following provides some advantageous features of this disclosure.

The classical computation can be orchestrated by a local runtime which executes the nodes from the dataflow graph which are either (a) not blocked due to an earlier node or (b) waiting for a circuit execution result from the QPU. Here it is assumed there is an arbitrary amount of classical computational capacity such that any classical computation is immediately allocated resources to execute it. This means there is no need for a prioritisation across nodes of the dataflow graph. If the classical computation is limited, i.e. there is not enough classical computation to execute all possible nodes concurrently, a prioritisation can be implemented to improve algorithmic performance. Possible prioritisation includes a random prioritisation, priority given to nodes which contain a circuit execution, or a priority given to nodes which unblock further nodes. Memory control for the parallel execution can use well-established ideas from traditional parallel computing and HPCs.

As discussed above regarding "Exposing parallelism" the QPU.run function passes the circuit to be executed and the number repeated of shots required to the runtime. This node is then marked awaiting a result and paused. To this request the runtime appends (or tags) a unique identification number for the requesting node (which is an example of a first-node-unique-identifier) and also for this request (which is an example of a first-request-unique-identifier). The unique identification number for this request is passed back to the node so that once the result is returned from the QPU the requesting node can confirm it is the correct result that has been return to it.

This list of 4 pieces of information (i.e. the circuit to be executed, the number of shots, the unique identification number for the requesting node, and the unique identification number for the request) is sent to the QPU as a circuit request to join the circuit request queue. If the queue is currently non-empty it is just added to the queue. Though if the queue is empty the state of the qubits can be immediately checked (as described below in the following paragraph about the implementor), if the qubits are currently idle the received circuit is immediately pushed to be executed on the qubits. If not, the requested circuit is added to the queue as if the queue was non-empty. The implementor's job is to take work from the circuit request queue and execute it on the QPU. Upon a circuit being completed on the QPU, the implementor is always called and measurement passed to the results delivery infrastructure discussed in the following section.

When the implementor is called it checks the state of the queue. If the queue is empty it can mark the qubits as being idle. If the queue is non-empty the implementor selects one of the elements of the queue to be implemented.

In the most basic version of this disclosure the service discipline used by the implementor is first in, first out with no prioritisation. Alternative service disciplines can be implemented if needed and requested at runtime by the developer. The developer can augment the request with a priority level based on the priority of the requesting node or implementing a back-pressure policy. A back-pressure policy can be implemented by partitioning a plurality of quantum circuits based on identifying, for each respective circuit of a respective partition, a common originating node of the of one or more classically-executable-nodes, determining a number of circuits present in each respective partition; and determining that the quantum-circuit belongs to a partition with a smallest number of circuits. This may advantageously provide a quickest way to enable a node to resume classical computations since the number of quantum circuit evaluations is smaller than required for other nodes.

If the local computation within the QPU is not able to support this infrastructure in full this can be implemented across both the QPU and CPU or completely on the CPU. In the case of an implementation completely in the CPU, the implementor and queue will act as above but the implementor will now stream circuits to the QPU which will buffer incoming circuits until they are executed. This means the implementor continuously acts, streaming to the QPU at a predetermined rate while the queue is non-empty.

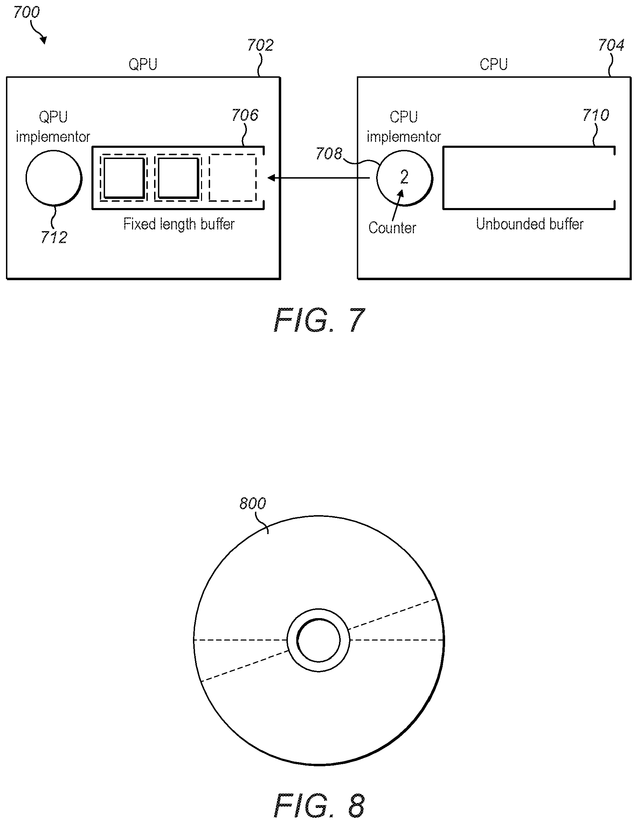

Figure 7 shows an implementation of the circuit queue 700 split across the QPU 702 and CPU 704 in which the components are duplicated with the following adjustments.

Firstly, the queue 706, which is an example of a fixed length buffer, on the QPU 702 is of bounded length, such that it has a predetermined maximum number of requests. This should be the maximal number of requests that can be stored on the QPU 702.

Secondly, an implementor 708 on the CPU 704 keeps a count of number of circuit requests currently residing on the QPU 702, including the circuit which is currently being executed. It does this by incrementing a counter by 1 when it sends a circuit request to the QPU 702 and decreasing/decrementing the counter by 1 once a measurement is received from the QPU 702. The counter is an example of a buffer-counter. When the execution of a circuit is complete, the QPU implementor 712 can then send the next circuit to the qubits for evaluation.

The CPU based implementor 708 is now triggered upon the receiving a result from the QPU 702 and acting as before or upon the receipt of the request to the empty queue. In the latter case it uses the counter in place of check for the idle flag, if the counter is below the maximum queue length on the QPU+1 the circuit request is immediately sent to the QPU 702 based queue otherwise it is stored in the CPU based queue 710. Determining whether to send another circuit to the QPU 702 can be determined if the value of a buffer-counter satisfies a threshold-value. The value of the buffer-counter may satisfy the threshold-value if the value of the buffer counter corresponds to a number of quantum-circuits present in the fixed-length-buffer 706 that is less than a capacity of the fixed-length-buffer 706.

Figure 8 shows an example computer program product 800 that contains instructions which, when executed, cause an apparatus, as described in figure 1, to at least perform steps of any method described above. Equivalently, there may also be provided a computer readable memory medium corresponding to the computer program product 800.

Throughout the above disclosure, the focus has been on the situation where a single programme is being executed on the hardware, but this infrastructure immediately supports the concurrent execution of multiple programmes sharing access to a QPU. It is possible to have a single queue and implementor, which is shared by all programmes and the unique identifier for the nodes are created to be not just unique with a programme but across the whole system. As discussed before, a prioritisation can be implemented by the implementor or a single service discipline like first in first out can be utilised.

## Claims

1. A method (400) for controlling a classical computer comprising one or more classically-executable-nodes (610) of a classical-quantum hybrid algorithm, the one or more classically-executable-nodes (610) being code modules that can be executed on a central processing unit of the classical computer,
wherein the classical computer is operatively coupled to a quantum computer, the method performed by the classical computer and comprising:
sending (402), by the one or more classically-executable-nodes (610), a first-circuit (502) to the quantum computer for evaluation;
receiving (404) a first-circuit-evaluation of the first-circuit from the quantum computer;
processing (406), by the one or more classically-executable-nodes (610), the first-circuit evaluation during a first-time interval;
sending (408), by the one or more classically-executable-nodes (610), a second-circuit (506) to the quantum computer for evaluation, by the quantum computer, at least in part during the first-time-interval;
receiving (410) a second-circuit-evaluation of the second-circuit, from the quantum computer, for processing by the one or more classically-executable-nodes (610);
sending a plurality of quantum circuits, comprising the first-circuit and the second-circuit, to a circuit-buffer (710) of the classical computer;
selecting a quantum-circuit of the plurality of quantum circuits;
sending, if a value of a buffer-counter (708) satisfies a threshold-value, the selected quantum-circuit to the quantum computer for:
storage in a fixed-length-buffer (706); and
evaluation by the quantum computer; and
incrementing the value of the buffer-counter (708) by one,
wherein the selecting of the quantum-circuit is based on a selection-policy comprising:
partitioning the plurality of quantum circuits based on identifying, for each respective circuit of a respective partition, a common originating node of the of one or more classically-executable-nodes (610);
determining a number of circuits present in each respective partition; and
determining that the quantum-circuit belongs to a partition with a smallest number of circuits.

2. The method of claim 1, further comprising:
processing, by the one or more classically-executable-nodes (610), the second-circuit evaluation during a second-time interval;
sending, by the one or more classically-executable-nodes (610) for evaluation by the quantum computer at least in part during the first-time-interval and/or the second-time-interval, a third-circuit (510) to the quantum computer; and
receiving a third-circuit-evaluation of the third-circuit, from the quantum computer, for processing by the one or more classically-executable-nodes (610).

3. The method of claim 1 or claim 2, wherein the classical-quantum hybrid algorithm has a structure corresponding to a directed acyclic graph with:
vertices formed from the one or more classically-executable-nodes (610); and
edges formed from a plurality of quantum-circuits comprising the first-circuit and the second-circuit.

4. The method of any preceding claim, wherein the one or more classically-executable-nodes (610) comprise:
a first-node configured to:
send the first-circuit (502) to the quantum computer;
receive the first-circuit-evaluation from the quantum computer; and
process the first-circuit-evaluation during the first-time interval, and
a second-node, different than the first-node, the second-node configured to:
send, for evaluation at least in part during the first-time-interval, the second-circuit (506) to the quantum computer;
receive the second-circuit-evaluation from the quantum computer; and
process the second-circuit-evaluation.

5. The method of any preceding claim, comprising:
tagging the first-circuit (502) with:
a first-node-unique-identifier that uniquely identifies a first-node, of the one or more classically-executable-nodes (610), sending the first-circuit (502);
a first-request-unique-identifier that uniquely identifies a request of the first-node for the first-circuit-evaluation;
receiving the first-circuit-evaluation with the first-node-unique-identifier and the first-request-unique-identifier; and
sending the first-circuit-evaluation and the first-request-unique-identifier to the first-node for processing.

6. The method of any preceding claim, comprising:
tagging the first-circuit (502) with a first-circuit-repeat-count;
sending, for evaluation a plurality of times in accordance with the first-circuit-repeat-count, the first-circuit (502) to the quantum computer; and
receiving and processing a plurality of first-circuit-evaluations.

7. The method of any preceding claim, comprising:
receiving the first-circuit-evaluation of the first-circuit (502) from the quantum computer;
decrementing the value of the buffer-counter (708) by one; and
checking the circuit-buffer (708) for a further quantum-circuit.

8. The method of any preceding claim, wherein the value of the buffer-counter (708) satisfies the threshold-value if the value of the buffer counter (708) corresponds to a number of quantum-circuits present in the fixed-length-buffer (706) that is less than a capacity of the fixed-length-buffer (706).

9. The method of any preceding claim, comprising adding one or more new-nodes, to the one or more classically-executable-nodes (610) of the classical-quantum hybrid algorithm, based on the first-circuit-evaluation and/or the second-circuit-evaluation.

10. The method of any preceding claim, wherein the classical-quantum hybrid algorithm is one or more of: a Variational Quantum Eigensolver; an optimization algorithm; and a quantum processor benchmarking algorithm.

11. A method for controlling a quantum computer, the quantum computer comprising a quantum-processor-unit (104), wherein the quantum computer is operatively coupled to a classical computer, the method performed by the quantum computer and comprising:
receiving a plurality of quantum-circuits from one or more classically-executable-nodes (610) of a classical-quantum hybrid algorithm, the one or more classically-executable-nodes (610) being code modules that can be executed on a central processing unit of the classical computer, wherein the plurality of quantum-circuits comprises a first-circuit (502) and a second-circuit (506);
evaluating, using the quantum-processor-unit (104), the first-circuit (502) to determine a first-circuit-evaluation;
sending, for processing during a first-time-interval, the first-circuit-evaluation to the at least one or more classically-executable-nodes (610);
evaluating, using the quantum-processor-unit (104), the second-circuit (506) to provide a second-circuit-evaluation, wherein the evaluating of the second-circuit (506) occurs, at least in part, during the first-time-interval;
sending, for processing during a second-time-interval, the second-circuit-evaluation to the at least one or more classically-executable-nodes (610)
storing the plurality of quantum-circuits in a circuit-buffer (706) of the quantum computer;
selecting a quantum-circuit, of the plurality of quantum circuits, based on a selection-policy determined by the classical computer;
evaluating the selected quantum-circuit to determine a selected-quantum-circuit-evaluation; and
sending the selected-quantum-circuit-evaluation to the at least one or more classically-executable-nodes (610) for processing,
wherein the selection-policy comprises:
partitioning, by the classical computer, the plurality of quantum circuits based on identifying, for each respective circuit of a respective partition, a common originating node of the of one or more classically-executable-nodes (610);
determining, by the classical computer, a number of circuits present in each respective partition; and
determining, by the classical computer, that the quantum-circuit belongs to a partition with a smallest number of circuits.

12. The method of claim 11, comprising:
receiving a third-circuit (510), of the plurality of quantum-circuits, from the one or more classically-executable-nodes (610);
evaluating, using the quantum-processor-unit (104), the third-circuit (510) to provide a third-circuit-evaluation, wherein the evaluating of the third-circuit (510) occurs, at least in part, during the first-time-interval and/or the second-time-interval;
sending the third-circuit-evaluation to the at least one or more classically-executable-nodes (610) for processing.

13. The method of claim 11 or claim 12, wherein the first-circuit (502) is received from a first-node of the one or more classically-executable-nodes (610) and the second-circuit (506) is received from a second-node of the one or more classically-executable-nodes (610) and the first-node is different than the second-node.

14. The method of any of claims 11 to 13, comprising:
receiving, from a first-node of the one or more classically-executable-nodes (610), the first-circuit (502) with:
a first-node-unique-identifier that uniquely identifies first-node;
a first-request-unique-identifier that uniquely identifies a request of the first-node for the first-circuit-evaluation;
sending the first-circuit-evaluation with the first-node-unique-identifier and the first-request-unique-identifier to the one or more classically-executable-nodes (610) for processing.

15. A computer readable medium comprising instructions which, when executed by a computer, the computer comprising a quantum computer operatively coupled to a classical computer, cause the computer to perform the method of any preceding claim.

## Patentansprüche

1. Verfahren (400) zur Steuerung eines klassischen Computers, umfassend einen oder mehrere klassisch ausführbare Knoten (610) eines klassischen Quanten-Hybridalgorithmus, wobei der eine oder die mehreren klassisch ausführbaren Knoten (610) Code-Module sind, die auf einer Zentralverarbeitungseinheit des klassischen Computers ausgeführt werden können, wobei der klassische Computer betriebsfähig an einen Quantencomputer gekoppelt ist, wobei das Verfahren von dem klassischen Computer durchgeführt wird und umfasst:
Senden (402) einer ersten Schaltung (502) durch den einen oder die mehreren klassisch ausführbaren Knoten (610) an den Quantencomputer zur Auswertung;
Empfangen (404) einer Erste-Schaltung-Auswertung der ersten Schaltung von dem Quantencomputer;
Verarbeiten (406) der Erste-Schaltung-Auswertung durch den einen oder die mehreren klassisch ausführbaren Knoten (610) während eines ersten Zeitintervalls;
Senden (408) einer zweiten Schaltung (506) durch den einen oder die mehreren klassisch ausführbaren Knoten (610) an den Quantencomputer zur Auswertung durch den Quantencomputer zumindest zum Teil während des ersten Zeitintervalls;
Empfangen (410) einer Zweite-Schaltung-Auswertung der zweiten Schaltung von dem Quantencomputer zur Verarbeitung durch den einen oder die mehreren klassisch ausführbaren Knoten (610);
Senden einer Vielzahl von Quantenschaltungen, umfassend die erste Schaltung und die zweite Schaltung, an einen Schaltungspuffer (710) des klassischen Computers;
Auswählen einer Quantenschaltung von der Vielzahl von Quantenschaltungen;
wenn ein Wert eines Pufferzählers (708) einen Schwellenwert erfüllt, Senden der ausgewählten Quantenschaltung an den Quantencomputer zur:
Speicherung in einem Puffer fester Größe (706); und
Auswertung durch den Quantencomputer; und
Inkrementieren des Werts des Pufferzählers (708) um eins,
wobei das Auswählen der Quantenschaltung auf einer Auswahlrichtlinie basiert, umfassend:
Partitionieren der Vielzahl von Quantenschaltungen auf der Basis eines Identifizierens eines gemeinsamen Ursprungsknotens von dem einen oder den mehreren klassisch ausführbaren Knoten (610) für jede jeweilige Schaltung einer jeweiligen Partition;
Bestimmen einer Anzahl von Schaltungen, die in jeder jeweiligen Partition vorliegt; und
Bestimmen, dass die Quantenschaltung zu einer Partition mit einer kleinsten Anzahl von Schaltungen gehört.

2. Verfahren nach Anspruch 1, ferner umfassend:
Verarbeiten der Zweite-Schaltung-Auswertung durch den einen oder die mehreren klassisch ausführbaren Knoten (610) während eines zweiten Zeitintervalls;
Senden einer dritten Schaltung (510) an den Quantencomputer durch den einen oder die mehreren klassisch ausführbaren Knoten (610) zur Auswertung durch den Quantencomputer zumindest zum Teil während des ersten Zeitintervalls und/oder des zweiten Zeitintervalls; und
Empfangen einer Dritte-Schaltung-Auswertung der dritten Schaltung von dem Quantencomputer zur Verarbeitung durch den einen oder die mehreren klassisch ausführbaren Knoten (610).

3. Verfahren nach Anspruch 1 oder Anspruch 2, wobei der klassische Quanten-Hybridalgorithmus eine Struktur aufweist, die einem gerichteten azyklischen Graph entspricht mit:
Scheitelpunkte, die von dem einen oder den mehreren klassisch ausführbaren Knoten (610) gebildet werden; und
Kanten, die von einer Vielzahl von Quantenschaltungen gebildet werden, umfassend die erste Schaltung und die zweite Schaltung.

4. Verfahren nach einem vorhergehenden Anspruch, wobei der eine oder die mehreren klassisch ausführbaren Knoten (610) umfassen:
einen ersten Knoten, der konfiguriert ist zum:
Senden der ersten Schaltung (502) an den Quantencomputer;
Empfangen der Erste-Schaltung-Auswertung von dem Quantencomputer; und
Verarbeiten der Erste-Schaltung-Auswertung während des ersten Zeitintervalls, und
einen zweiten Knoten, der sich von dem ersten Knoten unterscheidet, wobei der zweite Knoten konfiguriert ist zum:
Senden der zweiten Schaltung (506) an den Quantencomputer zur Auswertung zumindest zum Teil während des ersten Zeitintervalls;
Empfangen der Zweite-Schaltung-Auswertung von dem Quantencomputer; und
Verarbeiten der Zweite-Schaltung-Auswertung.

5. Verfahren nach einem vorhergehenden Anspruch, umfassend:
Markieren der ersten Schaltung (502) mit:
einer eindeutigen Erster-Knoten-Kennung, die einen ersten Knoten von dem einen oder den mehreren klassisch ausführbaren Knoten (610) eindeutig identifiziert, der die erste Schaltung (502) sendet;
einer eindeutigen Erste-Anforderung-Kennung, die eine Anforderung der Erste-Schaltung-Auswertung durch den ersten Knoten eindeutig identifiziert;
Empfangen der Erste-Schaltung-Auswertung mit der eindeutigen Erste-Knoten-Kennung und der eindeutigen Erste-Anforderung-Kennung; und
Senden der Erste-Schaltung-Auswertung und der eindeutigen Erste-Anforderung-Kennung an den ersten Knoten zur Verarbeitung.

6. Verfahren nach einem vorhergehenden Anspruch, umfassend:
Markieren der ersten Schaltung (502) mit einer Erste-Schaltung-Wiederholzahl;
Senden der ersten Schaltung (502) an den Quantencomputer zur Auswertung eine Vielzahl von Malen gemäß der Erste-Schaltung-Wiederholzahl; und
Empfangen und Verarbeiten einer Vielzahl von Erste-Schaltung-Auswertungen.

7. Verfahren nach einem vorhergehenden Anspruch, umfassend:
Empfangen der Erste-Schaltung-Auswertung der ersten Schaltung (502) von dem Quantencomputer;
Dekrementieren des Werts des Pufferzählers (708) um eins; und
Prüfen des Schaltungspuffers (708) auf eine weitere Quantenschaltung.

8. Verfahren nach einem vorhergehenden Anspruch, wobei der Wert des Pufferzählers (708) den Schwellenwert erfüllt, wenn der Wert des Pufferzählers (708) einer Anzahl von Quantenschaltungen entspricht, die in dem Puffer fester Länge (706) vorliegt, die kleiner als eine Kapazität des Puffers fester Länge (706) ist.

9. Verfahren nach einem vorhergehenden Anspruch, umfassend ein Hinzufügen eines oder mehrerer neuer Knoten zu dem einen oder den mehreren klassisch ausführbaren Knoten (610) des klassischen Quanten-Hybridalgorithmus auf der Basis der Erste-Schaltung-Auswertung und/oder der Zweite-Schaltung-Auswertung.

10. Verfahren nach einem vorhergehenden Anspruch, wobei es sich bei dem klassischen Quanten-Hybridalgorithmus um einen oder mehrere der folgenden handelt: einen Variational Quantum Eigensolver; einen Optimierungsalgorithmus und einen Quantenprozessor-Benchmarking-Algorithmus.

11. Verfahren zur Steuerung eines Quantencomputers, wobei der Quantencomputer eine Quantenprozessoreinheit (104) umfasst, wobei der Quantencomputer betriebsfähig an einen klassischen Computer gekoppelt ist, wobei das Verfahren von dem Quantencomputer durchgeführt wird und umfasst:
Empfangen einer Vielzahl von Quantenschaltungen von einem oder mehreren klassisch ausführbaren Knoten (610) eines klassischen Quanten-Hybridalgorithmus, wobei der eine oder die mehreren klassisch ausführbaren Knoten (610) Code-Module sind, die auf einer Zentralverarbeitungseinheit des klassischen Computers ausgeführt werden können, wobei die Vielzahl von Quantenschaltungen eine erste Schaltung (502) und eine zweite Schaltung (506) umfasst;
Auswerten der ersten Schaltung (502) unter Verwendung der Quantenprozessoreinheit (104), um eine Erste-Schaltung-Auswertung zu bestimmen;
Senden der Erste-Schaltung-Auswertung an den mindestens einen oder die mehreren klassisch ausführbaren Knoten (610) zur Verarbeitung während eines ersten Zeitintervalls;
Auswerten der zweiten Schaltung (506) unter Verwendung der Quantenprozessoreinheit (104), um eine Zweite-Schaltung-Auswertung bereitzustellen, wobei das Auswerten der zweiten Schaltung (506) zumindest zum Teil während des ersten Zeitintervalls erfolgt;
Senden der Zweite-Schaltung-Auswertung an den mindestens einen oder die mehreren klassisch ausführbaren Knoten (610) zur Verarbeitung während eines zweiten Zeitintervalls
Speichern der Vielzahl von Quantenschaltungen in einem Schaltungspuffer (706) des Quantencomputers;
Auswählen einer Quantenschaltung von der Vielzahl von Quantenschaltungen auf der Basis einer Auswahlrichtlinie, die von dem klassischen Computer bestimmt wird;
Auswerten der ausgewählten Quantenschaltung, um eine Ausgewählte-Quantenschaltung-Auswertung zu bestimmen; und
Senden der Ausgewählte-Quantenschaltung-Auswertung an den mindestens einen oder die mehreren klassisch ausführbaren Knoten (610) zur Verarbeitung,
wobei die Auswahlrichtlinie umfasst:
Partitionieren der Vielzahl von Quantenschaltungen durch den klassischen Computer auf der Basis eines Identifizierens eines gemeinsamen Ursprungsknotens von dem einen oder den mehreren klassisch ausführbaren Knoten (610) für jede jeweilige Schaltung einer jeweiligen Partition;
Bestimmen einer Anzahl von Schaltungen, die in jeder jeweiligen Partition vorliegt, durch den klassischen Computer; und
Bestimmen durch den klassischen Computer, dass die Quantenschaltung zu einer Partition mit einer kleinsten Anzahl von Schaltungen gehört.

12. Verfahren nach Anspruch 11, umfassend:
Empfangen einer dritten Schaltung (510) von der Vielzahl von Quantenschaltungen von dem einen oder den mehreren klassisch ausführbaren Knoten (610);
Auswerten der dritten Schaltung (510) unter Verwendung der Quantenprozessoreinheit (104), um eine Dritte-Schaltung-Auswertung bereitzustellen, wobei das Auswerten der dritten Schaltung (510) zumindest zum Teil während des ersten Zeitintervalls und/oder des zweiten Zeitintervalls erfolgt;
Senden der Dritte-Schaltung-Auswertung an den mindestens einen oder die mehreren klassisch ausführbaren Knoten (610) zur Verarbeitung.

13. Verfahren nach Anspruch 11 oder Anspruch 12, wobei die erste Schaltung (502) von einem ersten Knoten von dem einen oder den mehreren klassisch ausführbaren Knoten (610) empfangen wird und die zweite Schaltung (506) von einem zweiten Knoten von dem einen oder den mehreren klassisch ausführbaren Knoten (610) empfangen wird und sich der erste Knoten von dem zweiten Knoten unterscheidet.

14. Verfahren nach einem der Ansprüche 11 bis 13, umfassend:
Empfangen der ersten Schaltung (502) von einem ersten Knoten von dem einen oder den mehreren klassisch ausführbaren Knoten (610) mit:
einer eindeutigen Erster-Knoten-Kennung, die einen ersten Knoten eindeutig identifiziert;
einer eindeutigen Erste-Anforderung-Kennung, die eine Anforderung der Erste-Schaltung-Auswertung durch den ersten Knoten eindeutig identifiziert;
Senden der Erste-Schaltung-Auswertung mit der eindeutigen Erster-Knoten-Kennung und der eindeutigen Erste-Anforderung-Kennung an den einen oder die mehreren klassisch ausführbaren Knoten (610) zur Verarbeitung.

15. Computerlesbares Medium, umfassend Anweisungen, die bei Ausführung durch einen Computer bewirken, dass der Computer das Verfahren nach einem vorhergehenden Anspruch durchführt, wobei der Computer einen Quantencomputer umfasst, der betriebsfähig an einen klassischen Computer gekoppelt ist.

## Revendications

1. Procédé (400) de commande d'un ordinateur classique comprenant un ou plusieurs nœuds exécutables classiquement (610) d'un algorithme hybride classique-quantique, le ou les nœuds exécutables classiquement (610) étant des modules de code pouvant être exécutés sur une unité centrale de traitement de l'ordinateur classique, dans lequel l'ordinateur classique est couplé fonctionnellement à un ordinateur quantique, le procédé étant effectué par l'ordinateur classique et comprenant :
l'envoi (402), par le ou les nœuds exécutables classiquement (610), d'un premier circuit (502) à l'ordinateur quantique pour évaluation ;
la réception (404) d'une évaluation de premier circuit du premier circuit à partir de l'ordinateur quantique ;
le traitement (406), par le ou les nœuds exécutables classiquement (610), de l'évaluation de premier circuit pendant un premier intervalle de temps ;
l'envoi (408), par le ou les nœuds exécutables classiquement (610), d'un deuxième circuit (506) à l'ordinateur quantique pour évaluation, par l'ordinateur quantique, au moins en partie pendant le premier intervalle de temps ;
la réception (410) d'une évaluation de deuxième circuit du deuxième circuit, à partir de l'ordinateur quantique, pour traitement par le ou les nœuds exécutables classiquement (610) ;
l'envoi d'une pluralité de circuits quantiques, comprenant le premier circuit et le deuxième circuit, à un tampon de circuits (710) de l'ordinateur classique ;
la sélection d'un circuit quantique parmi la pluralité de circuits quantiques ;
l'envoi, si une valeur d'un compteur de tampon (708) satisfait à une valeur seuil, du circuit quantique sélectionné à l'ordinateur quantique pour :
stockage dans un tampon de longueur fixe (706) ; et
évaluation par l'ordinateur quantique ; et
l'incrémentation de un de la valeur du compteur de tampon (708),
dans lequel la sélection du circuit quantique est basée sur une politique de sélection comprenant :
le partitionnement de la pluralité de circuits quantiques sur la base de l'identification, pour chaque circuit d'une partition respective, d'un nœud d'origine commun parmi le ou les nœuds exécutables classiquement (610) ;
la détermination d'un nombre de circuits présents dans chaque partition ; et
le fait de déterminer que le circuit quantique appartient à une partition comportant un plus petit nombre de circuits.

2. Procédé selon la revendication 1, comprenant en outre :
le traitement, par le ou les nœuds exécutables classiquement (610), de l'évaluation de deuxième circuit pendant un second intervalle de temps ;
l'envoi, par le ou les nœuds exécutables classiquement (610), pour évaluation par l'ordinateur quantique au moins en partie pendant le premier intervalle de temps et/ou le second intervalle de temps, d'un troisième circuit (510) à l'ordinateur quantique ; et
la réception d'une évaluation de troisième circuit du troisième circuit, à partir de l'ordinateur quantique, pour traitement par le ou les nœuds exécutables classiquement (610).

3. Procédé selon la revendication 1 ou la revendication 2, dans lequel l'algorithme hybride classique-quantique présente une structure correspondant à un graphe acyclique orienté comportant :
des sommets formés à partir du ou des nœuds exécutables classiquement (610) ; et
des arêtes formées à partir d'une pluralité de circuits quantiques comprenant le premier circuit et le deuxième circuit.

4. Procédé selon l'une quelconque des revendications précédentes, dans lequel le ou les nœuds exécutables classiquement (610) comprennent :
un premier nœud configuré pour :
envoyer le premier circuit (502) à l'ordinateur quantique ;
recevoir l'évaluation de premier circuit à partir de l'ordinateur quantique ; et
traiter l'évaluation de premier circuit pendant le premier intervalle de temps, et
un second nœud, différent du premier nœud, le second nœud étant configuré pour :
envoyer, pour évaluation au moins en partie pendant le premier intervalle de temps, le deuxième circuit (506) à l'ordinateur quantique ;
recevoir l'évaluation de deuxième circuit à partir de l'ordinateur quantique ; et
traiter l'évaluation de deuxième circuit.

5. Procédé selon une quelconque revendication précédente, comprenant :
le marquage du premier circuit (502) avec :
un identificateur unique de premier nœud qui identifie de manière unique un premier nœud, parmi le ou les nœuds exécutables classiquement (610), envoyant le premier circuit (502) ;
un identificateur unique de première demande qui identifie de manière unique une demande du premier nœud pour l'évaluation de premier circuit ;
la réception de l'évaluation de premier circuit avec l'identificateur unique de premier nœud et l'identificateur unique de première demande ; et
l'envoi de l'évaluation de premier circuit et de l'identificateur unique de première demande au premier nœud pour traitement.

6. Procédé selon une quelconque revendication précédente, comprenant :
le marquage du premier circuit (502) avec un nombre de répétitions de premier circuit ;
l'envoi, pour évaluation une pluralité de fois conformément au nombre de répétitions de premier circuit, du premier circuit (502) à l'ordinateur quantique ; et
la réception et le traitement d'une pluralité d'évaluations de premier circuit.

7. Procédé selon une quelconque revendication précédente, comprenant :
la réception de l'évaluation de premier circuit du premier circuit (502) à partir de l'ordinateur quantique ;
la décrémentation de un de la valeur du compteur de tampon (708) ; et
la vérification de la présence d'un autre circuit quantique dans le tampon de circuits (708).

8. Procédé selon l'une quelconque des revendications précédentes, dans lequel la valeur du compteur de tampon (708) satisfait à la valeur seuil si la valeur du compteur de tampon (708) correspond à un nombre de circuits quantiques présents dans le tampon de longueur fixe (706) qui est inférieur à une capacité du tampon de longueur fixe (706).

9. Procédé selon l'une quelconque des revendications précédentes, comprenant l'ajout d'un ou plusieurs nouveaux nœuds, au ou aux nœuds exécutables classiquement (610) de l'algorithme hybride quantique classique, sur la base de l'évaluation de premier circuit et/ou de l'évaluation de deuxième circuit.

10. Procédé selon l'une quelconque des revendications précédentes, dans lequel l'algorithme hybride quantique classique est l'un ou plusieurs parmi : un solveur propre quantique variationnel ; un algorithme d'optimisation ; et un algorithme d'analyse comparative des processeurs quantiques.

11. Procédé de commande d'un ordinateur quantique, l'ordinateur quantique comprenant une unité de processeur quantique (104), dans lequel l'ordinateur quantique est couplé fonctionnellement à un ordinateur classique, le procédé étant effectué par l'ordinateur quantique et comprenant :
la réception d'une pluralité de circuits quantiques à partir d'un ou plusieurs nœuds exécutables classiquement (610) d'un algorithme hybride quantique classique, le ou les nœuds exécutables classiquement (610) étant des modules de code qui peuvent être exécutés sur une unité centrale de traitement de l'ordinateur classique, dans lequel la pluralité de circuits quantiques comprend un premier circuit (502) et un deuxième circuit (506) ;
l'évaluation, à l'aide de l'unité de processeur quantique (104), du premier circuit (502) pour déterminer une évaluation de premier circuit ;
l'envoi, pour traitement pendant un premier intervalle de temps, de l'évaluation de premier circuit au ou aux nœuds exécutables classiquement (610) ;
l'évaluation, à l'aide de l'unité de processeur quantique (104), du deuxième circuit (506) pour fournir une évaluation de deuxième circuit, dans lequel l'évaluation du deuxième circuit (506) a lieu, au moins en partie, pendant le premier intervalle de temps ;
l'envoi, pour traitement pendant un second intervalle de temps, de l'évaluation de deuxième circuit au ou aux nœuds exécutables classiquement (610)
le stockage de la pluralité de circuits quantiques dans un tampon de circuits (706) de l'ordinateur quantique ;
la sélection d'un circuit quantique, parmi la pluralité de circuits quantiques, sur la base d'une politique de sélection déterminée par l'ordinateur classique ;
l'évaluation du circuit quantique sélectionné pour déterminer une évaluation de circuit quantique sélectionné ; et
l'envoi de l'évaluation de circuit quantique sélectionné au ou aux nœuds exécutables classiquement (610) pour traitement,
dans lequel la politique de sélection comprend :
le partitionnement, par l'ordinateur classique, de la pluralité de circuits quantiques sur la base de l'identification, pour chaque circuit respectif d'une partition respective, d'un nœud d'origine commun parmi le ou les nœuds exécutables classiquement (610) ;
la détermination, par l'ordinateur classique, d'un nombre de circuits présents dans chaque partition respective ; et
le fait de déterminer, par l'ordinateur classique, que le circuit quantique appartient à une partition avec un plus petit nombre de circuits.

12. Procédé selon la revendication 11, comprenant :
la réception d'un troisième circuit (510), parmi la pluralité de circuits quantiques, à partir du ou des nœuds exécutables classiquement (610) ;
l'évaluation, à l'aide de l'unité de processeur quantique (104), du troisième circuit (510) pour fournir une évaluation de troisième circuit, dans lequel l'évaluation du troisième circuit (510) a lieu, au moins en partie, pendant le premier intervalle de temps et/ou le second intervalle de temps ;
l'envoi de l'évaluation de troisième circuit au ou aux nœuds exécutables classiquement (610) pour traitement.

13. Procédé selon la revendication 11 ou la revendication 12, dans lequel le premier circuit (502) est reçu à partir d'un premier nœud parmi le ou les nœuds exécutables classiquement (610) et le deuxième circuit (506) est reçu à partir d'un second nœud parmi le ou les nœuds exécutables classiquement (610) et le premier nœud est différent du second nœud.

14. Procédé selon l'une quelconque des revendications 11 à 13, comprenant :
la réception, à partir d'un premier nœud parmi le ou les nœuds exécutables classiquement (610), du premier circuit (502) avec :
un identificateur unique de premier nœud qui identifie de manière unique le premier nœud ;
un identificateur unique de première demande qui identifie de manière unique une demande du premier nœud pour l'évaluation de premier circuit ;
l'envoi de l'évaluation de premier circuit avec l'identificateur unique de premier nœud et l'identificateur unique de première demande au ou aux nœuds exécutables classiquement (610) pour traitement.

15. Support lisible par ordinateur comprenant des instructions qui, lorsqu'elles sont exécutées par un ordinateur, l'ordinateur comprenant un ordinateur quantique couplé fonctionnellement à un ordinateur classique, amènent l'ordinateur à effectuer le procédé selon l'une quelconque des revendications précédentes.
